# FASCICULE DE BREVET EUROPEEN

(11) **EP 2 861 514 B1**
(45) Date de publication et mention de la délivrance du brevet: **03.08.2016**
(21) Numéro de dépôt: 13727598.8
(22) Date de dépôt: 06.06.2013
(51) Int. Cl.: B65G 47/84, B29C 49/42

(54) **DISPOSITIF DE TRANSFERT À PAS VARIABLE POUR DES CORPS CREUX**
ÜBERTRAGUNGSVORRICHTUNG FÜR HOHLKÖRPER MIT VARIABLER TEILUNG
VARIABLE-PITCH TRANSFER DEVICE FOR HOLLOW BODIES

(30) Priorité: 19.06.2012 FR 1255713
(43) Date de publication de la demande: 22.04.2015
(73) Titulaire: Sidel Participations, 76930 Octeville sur Mer (FR)
(72) Inventeur: NGUYEN VAN, Daniel, F-76930 Octeville sur Mer (FR); DUPUIS, Pascal, F-76930 Octeville sur Mer (FR)
(74) Mandataire: Siloret, Patrick
(86) Numéro de dépôt international: PCT/EP2013/061658
(87) Numéro de publication internationale: WO 2013/189747

(56) Documents cités:
- EP-A1- 0 509 293
- EP-A1- 1 281 661
- DE-A1- 19 816 239
- FR-A1- 2 796 588

## Description

La présente invention concerne un dispositif de transfert à pas variable pour des corps creux.

On connaît des dispositifs de transfert de ce type qui sont notamment, mais non exclusivement, utilisés dans des installations de fabrication de récipients à partir de préformes en matière thermoplastique (comme le PET).

Une installation de fabrication de récipients, tels que des bouteilles, comporte généralement un four de conditionnement thermique des préformes, une machine telle qu'une souffleuse pour le façonnage des récipients à partir des préformes conditionnées thermiquement, et de préférence au moins une remplisseuse pour réaliser de suite le conditionnement du produit dans le récipient fabriqué.

Dans une telle installation comportant une souffleuse, des dispositifs de transfert sont notamment mis en oeuvre en amont pour transférer tout d'abord les préformes de la sortie du four jusqu'aux postes de soufflage puis en aval pour transférer les récipients de la sortie de la souffleuse à la remplisseuse.

Ces dispositifs de transferts de corps creux, notamment des préformes ou des récipients, sont avantageusement utilisés pour réaliser lors du transfert une variation de l'écartement angulaire ou distance entre deux corps creux consécutifs, on parle alors généralement pour cette fonction particulière de "variation de pas".

Les postes de soufflage de la souffleuse sont répartis angulairement de manière régulière avec un pas déterminé sur la circonférence du carrousel et chacun des postes de soufflage comporte conventionnellement un moule et des moyens de soufflage ou d'étirage-soufflage associés qui sont chacun aptes à transformer au moins une préforme préalablement conditionnée thermiquement dans un four en un récipient final désiré.

De la même manière, les postes de remplissage de la remplisseuse sont répartis angulairement de manière régulière avec un pas déterminé sur la circonférence du carrousel et chacun des postes de remplissage comporte au moins des moyens de remplissage, tels que des becs, qui sont aptes à remplir d'un produit donné chacun des récipients issus de la souffleuse située en amont dans l'installation de production.

Les caractéristiques techniques d'une souffleuse ou d'une remplisseuse sont notamment déterminées en fonction du récipient à produire et du type de produit à conditionner dans le récipient.

On caractérise généralement les machines rotatives précitées par un pas déterminé correspondant à l'écartement entre deux postes consécutifs.

Le "pas" entre deux postes peut être exprimé sous différentes formes, notamment par la valeur de l'arc de cercle reliant deux postes consécutifs ou encore par l'angle au centre associé à un tel arc, voire encore par le nombre de postes.

On rappellera que le périmètre d'un cercle de rayon R est égal à 2πR. de sorte que la longueur de l'arc de cercle séparant deux postes est obtenue au moyen de la formule : 2πRα / 360 ; dans laquelle l'angle α correspond à l'angle au centre précité.

Par exemple, une remplisseuse dont les postes de remplissage sont régulièrement répartis sur le périmètre du cercle avec un angle α égal à 36° présentera un nombre de dix postes, une telle remplisseuse étant alors dite de type "36PI", tandis qu'une souffleuse dite de type "45PI" de même rayon ne présentera a contrario que huit postes répartis avec un angle α de 45°.

Ainsi, en amont de la souffleuse, au moins un dispositif de transfert à pas variable procède au transfert des préformes avec une variation de pas, en passant de l'écartement réduit existant entre deux préformes consécutives en sortie du four à un pas déterminé de la souffleuse à laquelle sont délivrées les préformes.

En aval de la souffleuse, au moins un dispositif de transfert de type à pas variable est également mis en oeuvre lorsque la remplisseuse présente un pas différent de celui de la souffleuse.

Dans de telles installations de fabrication de récipients, les dispositifs rotatifs de transfert (encore appelés roues de transfert à pas variable) sont par conséquent mis en oeuvre, lorsque cela est nécessaire, pour réaliser une variation du pas simultanément au transfert des corps creux présentant un col à sa forme définitive.

Toutefois les dispositifs de transfert à pas variable connus dé l'état de la technique pour une telle application dans une installation de fabrication de récipient ne donnent pas entière satisfaction.

DE 198 16 239 A1 décrit un dispositif selon le préambule de la revendication 1.

Le but de la présente invention est donc de proproser une nouvelle conception de dispositif de transfert à pas variable.

Dans ce but, l'invention propose un dispositif de transfert à pas variable pour des corps creux, ledit dispositif comportant au moins :
- un disque d'entraînement monté mobile en rotation autour d'un axe central de rotation,
- au moins deux moyens de transfert consécutifs angulairement dont chacun est porté par des moyens de guidage qui sont montés mobiles en rotation autour de l'axe central de rotation et dont chacun est entraîné en rotation par le disque d'entraînement,
- une came qui est fixe par rapport à l'axe central de rotation et comporte un chemin de came formant un parcours en boucle fermée,
ledit dispositif comportant pour chaque moyen de transfert au moiris :
- une première bielle dont une extrémité est montée pivotante par rapport aux moyens de guidage autour d'un axe de pivotement qui est parallèle à l'axe central de rotation, et dont l'autre extrémité porte un galet de commande qui coopère avec le chemin de came de la came fixe,
- une deuxième bielle dont une extrémité est montée pivotante par rapport aux moyens de guidage autour dudit axe de pivotement de la première bielle, et dont l'autre extrémité portant un galet d'entraînement qui est reçu et guidé dans une lumière formée dans le disque d'entraînement, la première bielle et la deuxième bielle étant solidaires en rotation autour dudit axe de pivotement, grâce à quoi le pas entre deux moyens de transfert consécutifs varie lorsque lesdits moyens de transfert sont entraînés en continu en rotation par le disque d'entraînement.

Avantageusement, le dispositif de transfert à pas variable permet d'associer, dans une installation de fabrication du récipients, des machines ou unités telles qu'une souffleuse et une remplisseuse ne présentant pas un même pas de fonctionnement, sans toutefois que la mise en oeuvre du dispositif de transfert à pas variable soit limité à cette seule application.

Ainsi, il est également possible d'assurer une totale flexibilité de fonctionnement lorsque, les machines présentant ou non un même pas de fonctionnement, on souhaite tout particulièrement n'utiliser qu'une partie des postes de soufflage mais néanmoins la totalité des postes de remplissage.

Selon d'autres caractéristiques de l'invéntion :
- la première bielle et la deuxième bielle sont respectivement montées aux deux extrémités opposées d'une barre de liaison qui, formant ledit axe de pivotement commun, décalées l'une par rapport à l'autre selon l'axe central de rotation et sont reliées ensemble par ladite barre de liaison étant montée libre à rotation par rapport aux moyens de guidage et liée en rotation aux moyens de guidage ;
- les moyens de guidage d'un moyen de transfert sont formés par une paire de bras de guidage décalés axialement selon l'axe central de rotation ;
- chaque moyen de transfert du dispositif exécute en continu ledit parcours en boucle fermé entre, en amont, une première zone de chargement d'un corps ceux et, en aval, une deuxième zone de déchargement du corps creux, lesdits deux moyens de transfert se présentant successivement, d'une part, dans ladite première zone de chargement avec un pas initial pour occuper une position de chargement déterminée et, d'autre part, dans ladite deuxième zone de déchargement avec un pas final pour occuper une position de déchargement déterminée ;
- le corps creux est une préforme ou un récipient. D'autres caractéristiques et avantageas de l'intention apparaîtront à la lecture de la description qui va suivre pour la compréhension de laquelle on se reportera aux dessins annexés dans lesquels :
- la figure 1 est une vue en perspective qui représente un exemple de réalisation d'un dispositif de transfert à pas variable selon l'invention ;
- la figure 2 est une vue en perspective de dessus qui représente le dispositif selon la figure 1 et sur laquelle des éléments du dispositif tels que le couvercle ont été supprimés afin de rendre visible la came fixe commandant la variation de pas ;
- la figure 3 est une vue en perspective de dessous qui représente le dispositif selon la figure 1 et qui illustre les premières bielles portant les galets de commande coopérant avec le chemin de came de la came fixe ;
- la figure 4 est une vue de dessus du dispositif représenté aux figures 2 et 3 ;
- les figures 5 à 12 sont des vues, similaires à la figure 4, qui représentent schématiquement deux moyens de transfert de corps creux d'un dispositif selon l'exemple de réalisation de l'invention et qui illustrent la variation du pas déterminée par le chemin de la came fixe en représentant successivement la position relative desdits deux moyens de transfert tout au long du parcours en boucle fermé.

Par convention, dans la description qui va suivre et les revendications, on utilisera à titre non limitatif les termes "amont" et "aval" pour désigner le sens général de circulation anti-horaire des moyens de transfert autour de l'axe central de rotation, les orientations "axiale" et "radiale" par rapport audit axe central de rotation du dispositif, les termes "inférieur" et "supérieur" en référence à la direction verticale selon le trièdre (L, V, T) représenté sur les figures.

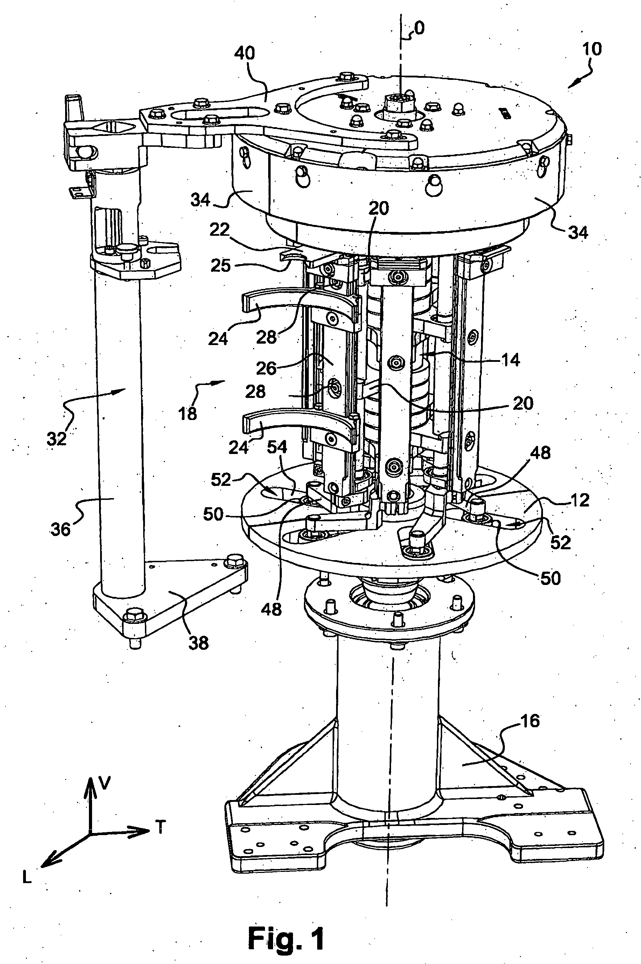

On a représenté à la figure 1 un exemple de réalisation d'un dispositif 10 de transfert pour des corps creux, ledit dispositif 10 étant du type "à pas variable", c'est-à-dire apte à faire varier l'écartement angulaire ou la distance entre deux moyens de transfert successifs.

Dans la présente description, le terme "corps creux" désigne une préforme ou un récipient respectivement en matière thermoplastique et présentant un col à sa forme définitive, par exemple pour le récipient et de manière non limitative : une bouteille, un pot ou encore un flacon.

Le dispositif 10 de transfert à pas variable pour des corps creux comporte des moyens d'entraînement formés par au moins un disque 12 d'entrainement.

Le disque 12 d'entraînement est monté mobile en rotation autour d'un axe central O de rotation du dispositif 10 de transfert.

Le dispositif 10 comporte un arbre 14 qui s'étend axialement suivant l'axe central O de rotation, c'est-à-dire selon la direction verticale du trièdre (L, V, T).

De préférence, le disque 12 d'entraînement est réalisé en deux parties notamment pour en faciliter le montage et le démontage et ce faisant le changement en fonction des applications.

Le dispositif 10 de transfert comporte un châssis 16 qui en supporte les différents moyens. Avantageusement, des moyen d'entraînement (non représentés), tel qu'un moteur, entraînent en rotation directement ou par l'intermédiaire d'une courroie de transmission (non représentée) le disque 12 d'entraînement autour de l'arbre 14 à une vitesse de rotation déterminée.

Le dispositif 10 de transfert comporte au moins deux moyens 18 de transfert consécutifs angulairement dont chacun est porté par des moyens 20 de guidage qui sont montés mobiles en rotation autour de l'axe central O de rotation et dont chacun est entraîné en rotation par le disque 12 d'entraînement.

De préférence, les moyens 20 de guidage d'un moyen 18 de transfert sont formés par au moins une paire de bras de guidage. Les bras 20 de guidage sont, à une extrémité, montrés mobile en rotation autour de l'arbre 14 et à l'autre extrémité solidaires du moyen 18 de transfert associé.

Les bras 20 de guidage sont décalés axialement l'un par rapport à l'autre selon l'axe central O de rotation.

Dans l'exemple de réalisation représenté sur les figures 1 à 3, le dispositif 10 de transfert comporte au total six moyens 18 de transfert de corps creux qui sont répartis circonférentiellement autour de l'arbre 14.

Bien entendu, le nombre "n" de moyens 18 de transfert du dispositif 10 est susceptible de varier en fonction notamment des applications, le nombre "n" pouvant être un nombre pair ou impair.

Seul l'un de ces six moyens 18 de-transfert a été complètement représenté sur les figures 1 à 3 et sera décrit ci-après, lesdits moyens 18 de transfert selon l'exemple de réalisation étant destinés à réaliser le transfert d'un corps creux formé par un récipient (non représenté), tel qu'une bouteille.

Pour chacun des moyens 18 de transfert, la partie destinée à coopérer avec le récipient comporte ici trois éléments, à savoir une palette 22 et une paire de guides 24.

La palette 22 comporte une encoche 25 globalement circulaire et ouverte radialement vers l'extérieur par rapport à l'axe central O de rotation.

En position de transfert, ladite palette 22 est positionnée sous une collerette radiale que comporte le récipient, à la jonction de son col (ou goulot) et du corps du récipient de manière que la collerette étant en appui sur la surface horizontale supérieure de la palette 22, le récipient soit supporté par ladite palette 22.

Les deux guides 24, respectivement supérieur et inférieur, sont décalés axialement selon l'axe central O de rotation et coopèrent chacun avec une partie du corps du récipient.

Par facilité, les moyens 18 de transfert ont été représentés pour un seul poste sur les six que comporte le dispositif 10.

En variante, le corps creux est constitué par une préforme et les moyens 18 de transfert sont alors par exemple seulement formés par une palette 22.

Des moyens complémentaires des moyens 18 de transfert, tels qu'un rail de guidage en arc de cercle (non représenté), sont agencés en vis-à-vis à l'extérieur du dispositif 10, sur une partie du parcours de transfert.

De manière connue, dé tels moyens sont destinés à maintenir le récipient en place car le récipient subit les effets de la force centrifuge lorsque le dispositif 10 est entraîné en rotation pour opérer le transfert.

En variante, les moyens 18 de transfert sont formés par des moyens de préhension du corps creux tels qu'une pince comportant deux mors, commandés ou non en ouverture et/ou fermeture.

De préférence, les moyens 18 de transfert formés par la palette 22 et les guides 24 sont montés sur un même élément 26 de support qui est rapporté à fixation, par exemple par vissage au moyen de vis 28, sur l'extrémité libre des bras 20 formant les moyens de guidage.

L'élément 26 de support est une glissière sur laquelle les moyens 18 de transfert sont montés mobiles en coulissement selon la direction verticale, de préférence comme ici par l'intermédiaire de pièces mobiles de support.

Grâce à un tel élément 26 de support, les moyens 18 de transfert qui coopèrent avec le récipient, à savoir la palette 22 et la paire de guide 24, sont susceptibles d'être rapidement démontés et changés lorsque le récipient à transférer change.

Avantageusement, les moyens 18 de transfert coulissent par rapport à la glissière de l'élément 26 de support grâce à quoi il est possible d'en régler également la position axiale pour chaque application, en particulier en fonction de la contenance du récipient.

Le dispositif 10 de transfert comporte une came 30 qui est fixe par rapport à l'axe central O de rotation.

Le dispositif 10 de transfert comporte à cet effet des moyens 32 de blocage qui, représentés sur la figure 1, sont destinés à bloquer en rotation ladite came 30 par rapport aux autres moyens tournant du dispositif 10.

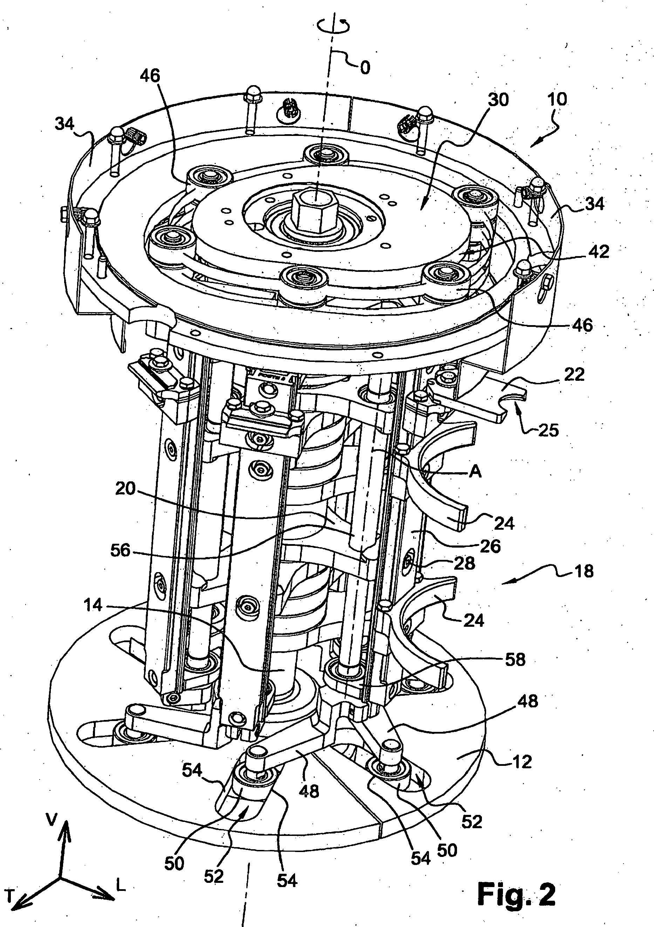

De préférence et tel qu'illustré par la figure 1, la came 30 est protégée par un carter 34 et dont une partie a été ôtée sur les figures 2 à 4 pour notamment rendre visible ladite came 30.

Les moyens 32 de blocage en rotation de la came 30 sont agencés à côté du dispositif 10 de transfert.

Les moyens 32 de blocage en rotation de la came 30 comportent un mat 36 pourvu à son extrémité inférieure d'une embase 38 pour sa fixation au sol par rapport au dispositif 10 et un bras 40 de blocage s'étendant radialement à partir de l'extrémité supérieure du mat 36.

Le bras 40 de blocage présente une forme en "Y" et vient immobiliser la came 30, ledit bras 40 étant solidaire de la came 30 par l'intermédiaire de vis qui traversent une partie du carter 34 formant couvercle représentée sur la figure 1.

La came 30 comporte un chemin 42 de came formant un parcours en boucle fermée qui est parcouru en continu en fonctionnement du dispositif 10 de transfert.

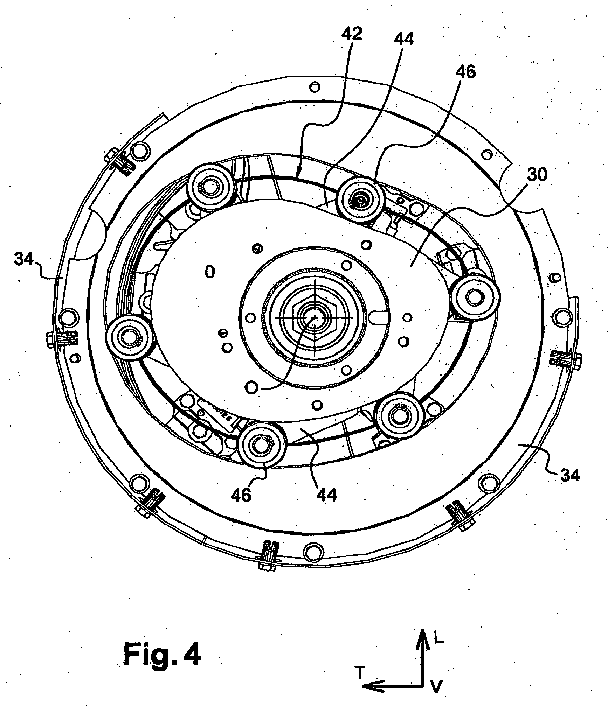

Comme illustré par la figure 4, lé chemin 42 de came est centré sur l'axe O de rotation et étant pas circulaire va provoquer sélectivement la variation de pas entre deux moyens 18 de transfert consécutifs.

Le dispositif 10 de transfert comporte une première bielle 44 dont une extrémité est montée pivotante par rapport aux moyens 20 de guidage autour d'un axe A de pivotement qui est parallèle à l'axe central O de rotation.

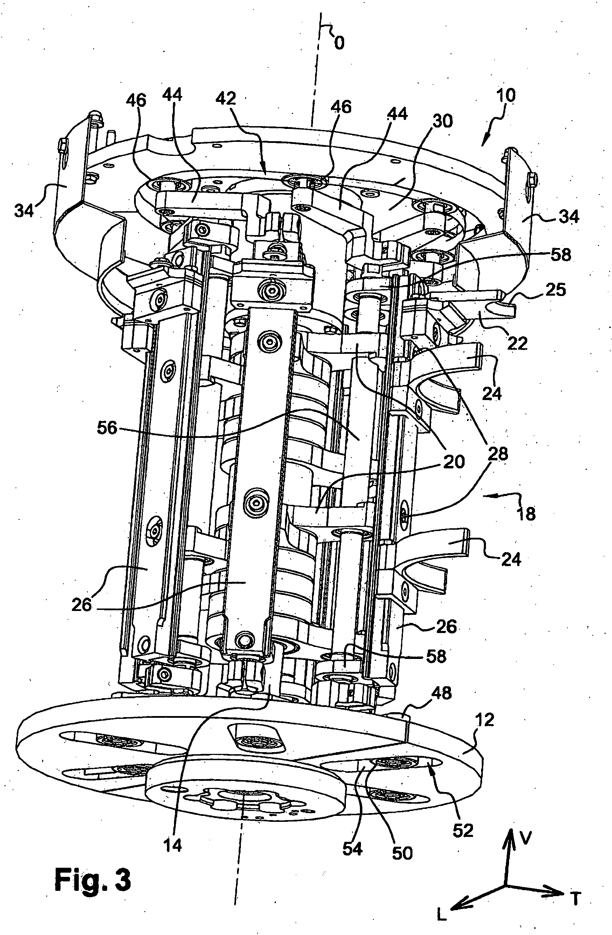

L'autre extrémité de la première bielle 44 porte un galet 46 de commande qui coopère avec le chemin 42 de came de la came 30 fixe comme on peut le voir sur la figure 3.

Le dispositif 10 de transfert comporte une deuxième bielle 48 dont une extrémité est montée pivotante par rapport aux moyens 20 de guidage autour dudit axe A de pivotement de la première bielle 44.

L'autre extrémité de la deuxième bielle 48 porte un galet 50 d'entraînement qui est reçu et guidé dans une lumière 52 formée dans le disque 12 d'entraînement.

La lumière 52 est ici de forme oblongue et s'étend globalement radialement avec une inclinaison donnée par rapport à un rayon passant par l'axe central O de rotation.

La lumière 52 comporte notamment deux bords 54 rectilignes et parallèles entre eux, en variante les bords 54 sont curvilignes.

Le galet 50 d'entraînement coopère avec l'un des bords 54, l'un ou l'autre des bords 54 étant déterminé par le sens d'entraînement en rotation du disque 12 d'entraînement.

Le disque 12 d'entraînement comporte une lumière 52 pour chacun des moyens 18 de transfert.

Le dispositif 10 de transfert comporte pour chacun des moyens 18 de transfert au moins une première bielle 44 et une deuxième bielle 48 telles que décrites précédemment.

La première bielle 44 et la deuxième bielle 48 sont solidaires en rotation autour dudit axe A de pivotement, c'est à dire liées entre elles en déplacement et pivotent par conséquent de manière synchrone autour de l'axe A de pivotement.

De préférence, la première bielle 44 et la deuxième bielle 48 sont respectivement montées aux deux extrémités opposées d'une barre 56 de liaison formant ledit axe A de pivotement commun.

La première bielle 44 et la deuxième bielle 48 sont décalées axialement l'une par rapport à l'autre selon l'axe central O de rotation.

La barre 56 de liaison reliant ensemble la première bielle 44 et la deuxième bielle 48 est montée libre à rotation par rapport aux bras 20 formant les moyens de guidage de sorte que la barre 56 de liaison et la première bielle 44 et la deuxième bielle 48 forment un sous-ensemble unitaire susceptible de pivoter autour de l'axe A de pivotement indépendamment desdits bras 20 de guidage des moyens de transfert.

La barre 56 de liaison traverse à jeu l'extrémité desdits bras 20 de guidage qui est à l'opposé de l'arbre 14 de sorte que la barre 56 de liaison est liée en déplacement à la paire de bras 20 de guidage.

La barre 56 de liaison et les bras 20 de chaque moyen 18 de transfert se déplacent ainsi ensemble en rotation autour de l'axe central O de rotation.

Lorsque le disque 12 d'entraînement est entraîné en rotation autour de l'axe central O de rotation par l'intermédiaire de l'arbre 14, chaque galet 50 d'entraînement est alors entraîné simultanément en rotation par le disque 12 d'entraînement par l'intermédiaire des lumières 52.

Chaque galet 50 d'entraînement coopère avec au moins l'un des bords 54 de la lumière 52, ledit bord 54 transmettant l'effort d'entraînement du disque 12 au galet 50 porté par une deuxième bielle 48.

La première bielle 44 étant liée en rotation à la deuxième bielle 48, ici par la barre 56 de liaison, la première bielle 44 est alors également entraînée simultanément en rotation autour de l'axe central O de rotation.

De préférence, le dispositif 10 de transfert comporte des moyens 58 supplémentaires formant palier pour la barre 56 de liaison, les moyens 58 sont agencés à chaque extrémité de la barre 56 et sont solidaires de la glissière 26 portant les moyens 18 dé transfert.

Le galet 46 de commande portée par ladite première bielle 44 se déplace alors dans le chemin 42 de came de la came 30 suivant le parcours en boucle fermé représenté à la figure 4, le chemin 42 de came commandant la variation du pas ou écartement angulaire entre chaque moyen 18 de transfert, en particulier par rapport au moyen 18 de transfert le précédant suivant le sens de rotation du disque 12 d'entraînement autour de l'axe central O de rotation.

Le galet 46 de commande d'un moyen 18 de transfert se déplace dans le chemin 42 de came en étant libre de rattraper ou de s'éloigner de celui qui le précède car la première bielle 44 pivote autour de l'axe A de pivotement de sorte que la deuxième bielle 48 se déplace alors en roulant contre le bord 54 rectiligne de la lumière 52.

L'ensemble formé par la première bielle 44 et la deuxième bielle 48 reliées par la barre 56 de liaison oscille ainsi autour de l'axe A de pivotement, le galet 50 d'entraînement en se déplaçant dans la lumière 52 permet au galet 46 de commande de suivre le chemin 42 de came.

Dans l'exemple de réalisation des figures 1 à 4, la première bielle 44 et la deuxième bielle 48 d'un moyen 18 de transfert sont de préférence comprises dans le même plan vertical passant par l'axe A de pivotement de sorte que les bielles 44 et 48 sont superposées axialement, la deuxième bielle 48 étant à l'aplomb de la première bielle 44.

En variante, la première bielle 44 et la deuxième bielle 48 d'un moyen 18 de transfert sont décalées angulairement l'une par rapport à l'autre autour de l'axe A de pivotement.

Grâce aux moyens du dispositif 10 de transfert selon l'invention, le pas entre deux moyens 18 de transfert consécutifs varie lorsque lesdits moyens 18 de transfert sont entraînés en continu en rotation par le disque 12 d'entraînement.

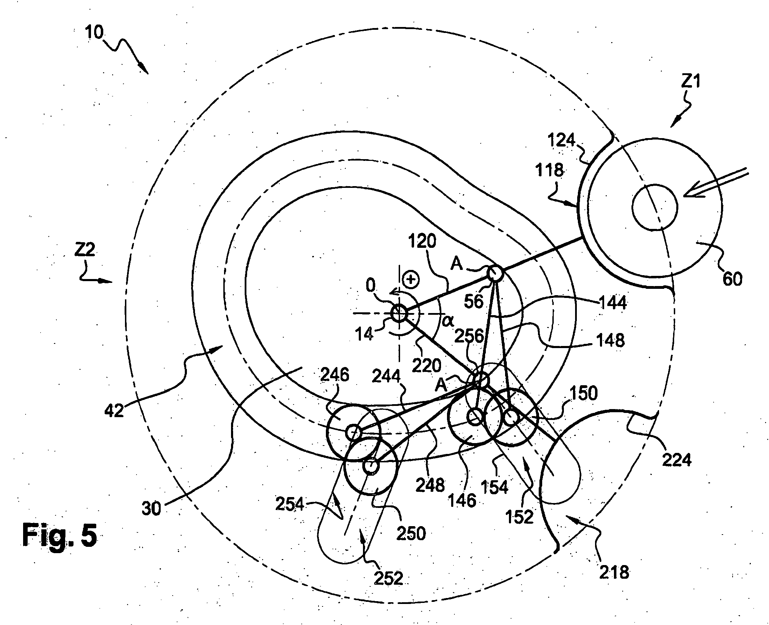

On décrira maintenant plus en détail le fonctionnement du dispositif 10 de transfert en référence aux figures 5 à 12.

On a représenté schématiquement sur la figure 5 et les figures suivantes le dispositif 10 de transfert en vue de dessus, comme à la figure 4 sans la partie supérieure du carter 34 formant couvercle.

Afin d'en faciliter la compréhension, la figure 5 comporte volontairement deux moyens de transfert seulement (par comparaison aux six moyens de transfert des figures 1 à 3) et pour mieux les distinguer un premier moyen de transfert est référencé 118 tandis qu'un deuxième moyen de transfert est référencé 218.

Pour faciliter également la compréhension, la première bielle et la deuxième bielle d'un moyen de transfert ont ici été décalées angulairement l'une par rapport à l'autre autour de l'axe A de pivotement et ne sont par conséquent pas superposées verticalement l'une et l'autre comme dans l'exemple de réalisation des figures 1 à 3.

Par comparaison avec le moyen 18 de transfert décrit auparavant, les mêmes chiffres de référence désignent les mêmes éléments, augmentés toutefois d'une centaine pour ceux du premier moyen 118 de transfert et de deux centaines pour le deuxième moyen 218 de transfert.

A titre d'exemple, le bras de guidage du premier moyen 118 de transfert est ainsi référencé 120 tandis que celui du deuxième moyen 218 de transfert est référencé 220.

Le dispositif 10 de transfert tourne autour de l'axe central O de rotation, ici selon le sens antihoraire, de sorte que le premier moyen 118 de transfert précède le deuxième moyen 218 de transfert.

Dans l'exemple de réalisation, le dispositif 10 de transfert est agencé entre une souffleuse et une remplisseuse d'une installation de fabrication de récipients de sorte que les corps creux transportés par les moyens de transfert sont les récipients venant d'être façonnés dans la souffleuse à partir des préformes préalablement conditionnées thermiquement.

Ainsi, chaque moyen 118, 218 de transfert du dispositif 10 transfert exécute en continu le parcours en boucle fermé entre, en amont, une première zone Z1 de changement d'un corps creux, dans l'exemple un récipient issu de la souffleuse et, en aval, une deuxième zone Z2 de déchargement du corps creux, ici vers la remplisseuse.

Les deux moyens 118, 218 de transfert se présentent successivement, d'une part, dans ladite première zone Z1 de chargement avec un pas initial P pour occuper une position de chargement déterminée et, d'autre part, dans ladite deuxième zone Z2 de déchargement avec un pas final P' pour occuper une position de déchargement déterminée.

Avantageusement, le pas initial P correspond donc à un premier pas P1 de la souffleuse tandis que le pas final P' correspond au second pas P2 dé la remplisseuse.

Sur la figure 5, le premier moyen 118 de transfert occupe la position de chargement dans laquelle, tel que représenté schématiquement par une flèche, un récipient 60 issu de la souffleuse est introduit dans le moyen 118 de transfert.

Le récipient 60 est issu directement du moule de la souffleuse ou, en variante, au moins une roue intermédiaire est interposée entre le moule en sortie de la souffleuse et le dispositif 10 de transfert.

Le deuxième moyen 218 de transfert est quant à lui vide et ne comporte pas de récipient 60.

Le pas entre le premier moyen 118 de transfert et le deuxième moyen 218 de transfert correspond à un écartement angulaire donné, soit un angle au centre "α" entre les bras 120 de guidage et les bras 220 de guidage d'une valeur égale à 60° environ.

Sous l'action du disque 12 d'entraînement, les galets 150, 250 d'entraînement sont entraînés en rotation autour de l'axe central O de rotation, les bords 154, 254 des lumières 152, 252 les sollicitant respectivement, et les galets 146, 246 de commande de chacun des deux moyens 118, 218 de transfert se déplacent également dans le chemin 42 de came de la came 30 fixe.

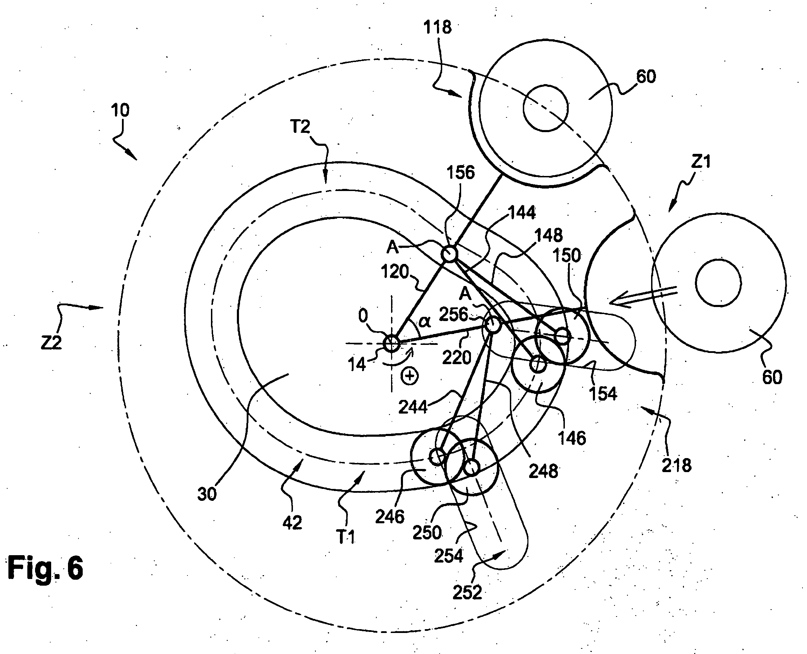

Par comparaison entre les figures 5 et 6, on constate que l'écartement angulaire initial diminue, le deuxième moyens 218 de transfert se rapprochant du premier moyen 118 qui le précède et l'angle au centre "α" entre les bras 120 de guidage du premier moyen 118 de transfert et les bras 220 de guidage du deuxième moyen 218 de transfert atteint alors une valeur égale à 45° environ.

Tel qu'illustré par la figure 6, le deuxième moyen 218 de transfert est alors sur le point d'atteindre à son tour ladite position de chargement, celle-là même qu'occupait le premier moyen 118 de chargement sur la figure 5, et de recevoir le récipient 60 issu du moule suivant de la souffleuse.

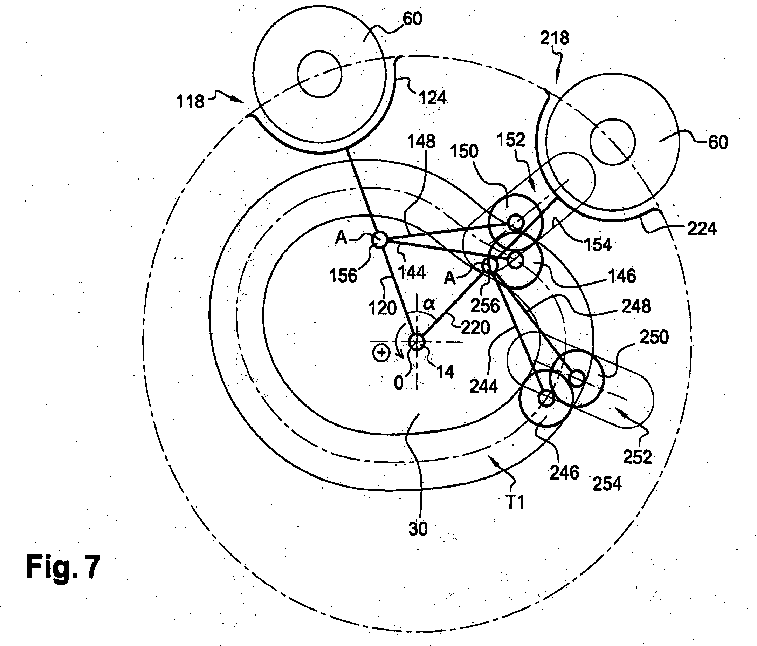

A la figure 7, le chargement du récipient 60 sur le deuxième moyen 218 de transfert est achevé et la rotation du disque 12 d'entraînement autour de l'axe central O de rotation se poursuit pour effectuée le transfert des récipients 60 chargés vers la remplisseuse.

Sur la figure 7, la valeur de l'angle au centre "α" entre les bras 120 de guidage du premier moyen 118 de transfert et les bras 220 de guidage du deuxième moyen 218 de transfert a augmenté pour atteindre une valeur égale à 70° environ.

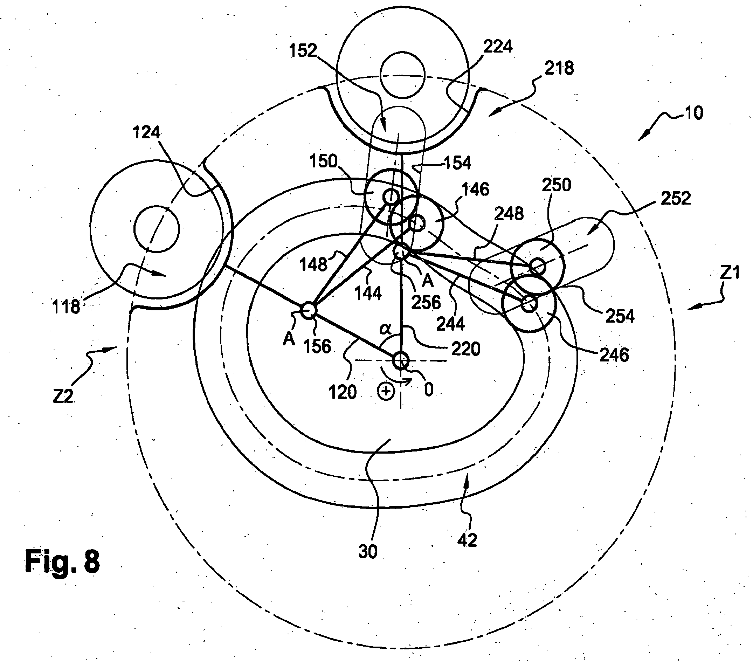

Sur la figure 8, le transfert des récipients 60 se poursuit vers la deuxième zone Z2 de déchargement dans laquelle chaque récipient 60 est successivement déchargé vers la remplisseuse.

Sur la figure 8, la valeur de l'angle au centre angle "α" commence à se réduire pour atteindre une valeur égale à 65° environ, de sorte que le deuxième moyen 218 de transfert s'est par conséquent rapproché du premier moyen 118 de transfert.

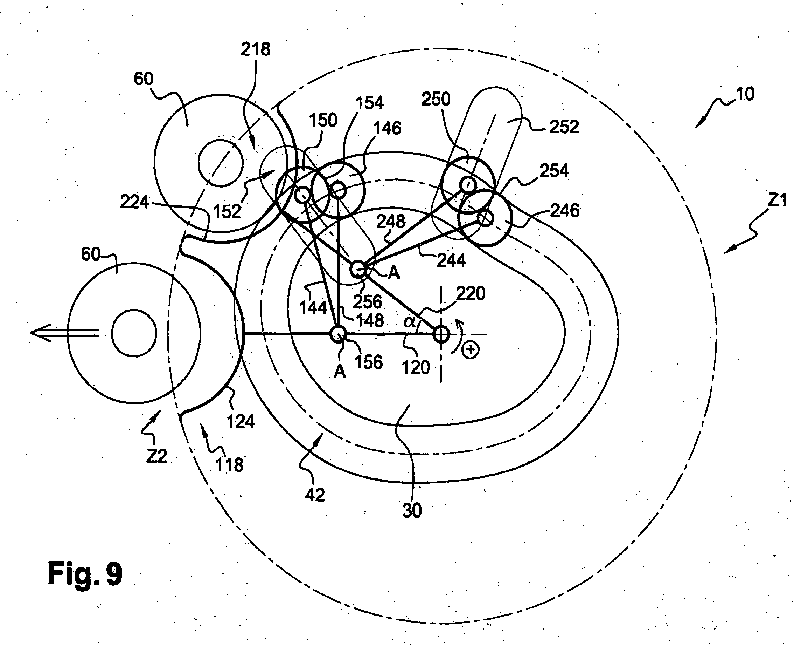

Sur la figure 9, l'écartement angulaire entre le premier moyen 118 de transfert et le deuxième moyen 218 de transfert s'est réduit pour atteindre une valeur égale à 35° environ et les moyens 118, 218 de transfert sont alors côte à côte, au plus proche l'un de l'autre.

Tel qu'illustré sur la figure 9 et représenté par une flèche, le récipient 60 du premier moyen 118 de transfert est alors transféré vers la remplisseuse.

Des moyens, tels que des pinces, sont par exemple utilisés pour réaliser tant les opérations de chargement de récipient dans la première zone Z1 que de déchargement dans la deuxième zone Z2.

De préférence, une telle pince comporte deux mors montés mobiles entre une position ouverte et une position fermée de la pince, l'ouverture et/ou la fermeture de la pince étant avantageusement commandée sélectivement et des moyens de rappel automatique des mors vers au moins l'une des positions ouverte/fermée prévus.

Avantageusement, les mors de la pince se positionnent sur le col du corps creux, préforme ou récipient, verticalement au dessus de la collerette radiale destinée à venir en appui contre la face horizontale supérieure de la palette 22 des moyens de transfert.

Lors de la variation du pas (ou écartement annulaire) entre le premier moyen 118 de transfert et le deuxième moyen 218 de transfert et tel qu'illustré particulièrement sur les figures 7 à 9, chacun des galets 150, 250 d'entraînement s'est également déplacé dans la lumière 152, 252 correspondante.

Ainsi, le galet 150 d'entraînement du premier moyen 118 de transfert a roulé contre le bord 154 de la lumière 152 avec lequel ledit galet 150 coopère et s'est radialement éloigné de l'axe central O de rotation tandis que le galet 250 d'entraînement du deuxième moyen 218 de transfert a roulé contre le bord 254 de la lumière 252 avec lequel ledit galet 250 coopère et s'est inversement rapproché radialement de l'axe central O de rotation.

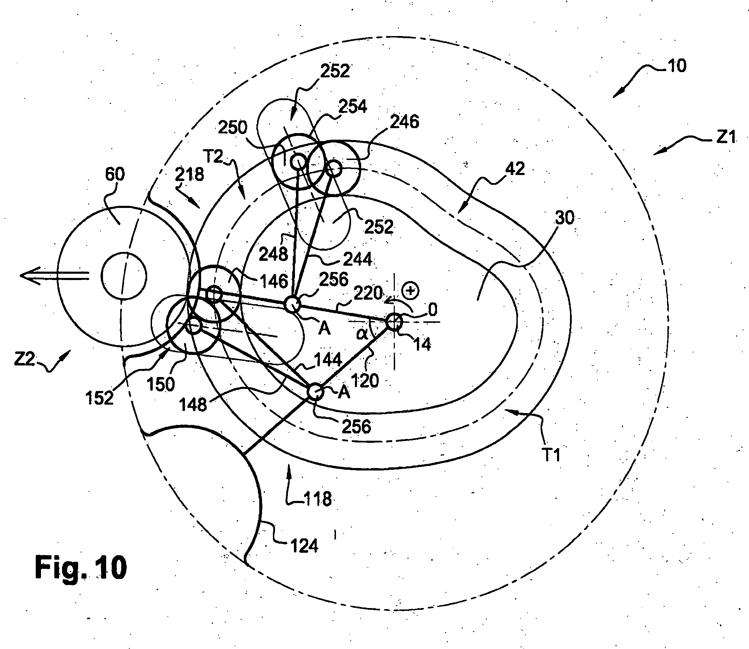

Tel qu'illustré sur la figure 10, le premier moyen 118 de transfert vide poursuit son parcourt en boucle fermée tandis que le deuxième moyen 218 arrive à son tour dans la deuxième zone Z2 de déchargement où son récipient 60 va également être transféré vers la remplisseuse.

Sur la figure 10, l'écartement angulaire entre le premier moyen 118 de transfert vide et le deuxième moyen 218 de transfert en instance de l'être correspond à un angle au centre "α" qui commence de nouveau à augmenter pour atteindre une valeur égale à 50° environ.

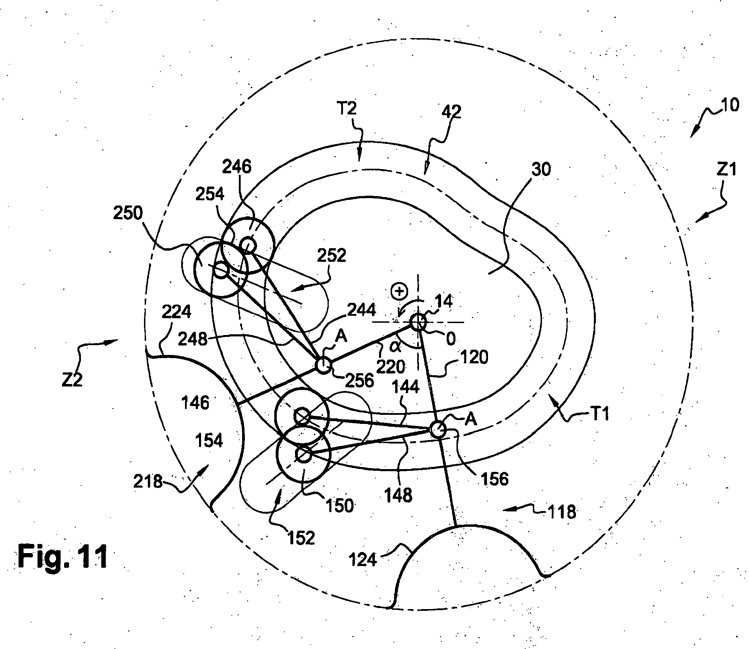

Sur la figure 11, le deuxième moyen 218 de transfert est également vide et le récipient 60 qu'il comportait a été transféré vers la remplisseuse, les deux moyens 118, 218 de transfert poursuivent alors leur parcours en boucle fermée en direction de la première zone Z1 de chargement en vue de prendre à nouveau en charge un récipient 60, le premier moyen 118 de transfert précédant le deuxième moyens moyen 218 suivant le sens de rotation anti-horaire du dispositif 10 de transfert autour de l'axe central O de rotation.

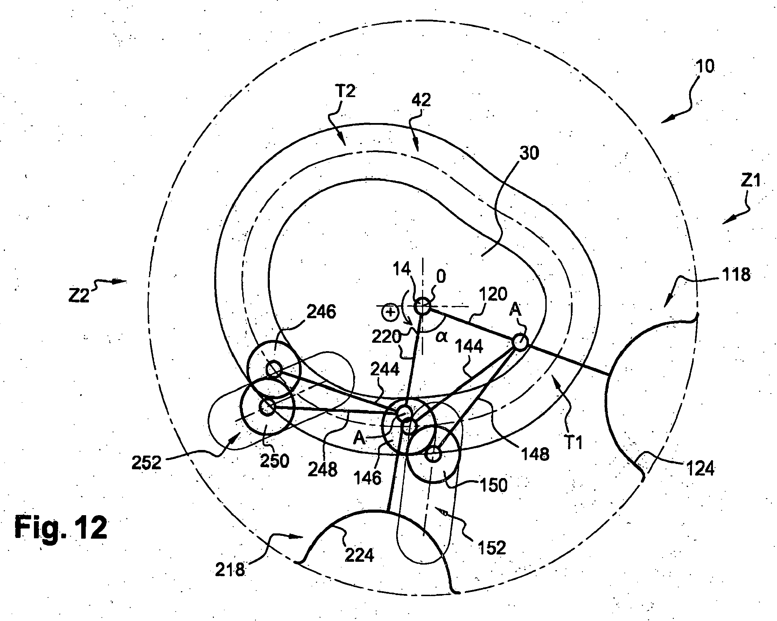

Sur les figures 11 et 12, l'écartement angulaire entre le premier moyen 118 de transfert et le deuxième moyen 218 de transfert respectivement vides est sensiblement égal et correspond à un angle au centre "α" d'une valeur égale à 80° environ.

Le déplacement de chacun des galets 150, 250 d'entraînement dans les lumières 152, 252 correspondantes du disque 12 d'entraînement permet à chacun des bras 120, 220 de guidage du premier moyen 118 de transfert et du deuxième moyen 218 de transfert de s'écarter ou de se rapprocher l'un de l'autre en fonction du tronçon du chemin 42 de came parcouru.

En effet, la came 30 est conformée pour assurer sélectivement, par le chemin 42, la variation du pas (ou écartement angulaire) lesdits au moins deux des moyens 118, 218 de transfert lorsque le dispositif 10 de transfert est entraîné autour de l'axe central O de rotation suivant ledit parcours en boucle fermée.

Avantageusement, la came 30 assure sélectivement la variation du pas des moyens 118, 218 de transfert pour que le pas des moyens 118, 218 de transfert varie de la valeur du pas initial P au pas final P' lorsque les moyens 118, 218 de transfert parcourent un tronçon, dit aller, de la came 30 qui s'étend depuis la position de chargement dans la première zone Z1 jusqu'à la position de déchargement dans la deuxième zone Z2.

De la même manière et réciproquement, la came 30 assure sélectivement la variation du pas des moyens 118, 218 de transfert pour que le pas des moyens 118, 218 de transfert varie du pas final P' au pas initial P lorsque les moyens 118, 218 de transfert parcourent un tronçon, dit retour, de la came 30 qui s'étend depuis la position de déchargement dans la deuxième zone Z2 jusqu'à la position de chargement dans la première zone Z1.

Ainsi, la valeur du pas final P' étant inférieure à la valeur du pas initial P, la came 30 comporte avantageusement au moins un premier tronçon T1 de came et un second tronçon T2 de came.

Le premier tronçon T1 de la came 30 s'étend suivant le sens de rotation autour de l'axe central O de rotation de la position de déchargement à la position de chargement.

Le premier tronçon T1 de came est apte à ralentir les moyens 118, 218 de transfert la parcourant pour augmenter l'écartement entre un deuxième moyen 218 de transfert et un premier moyen 118 de transfert qui, suivant le sens de rotation anti-horaire du dispositif 10 de transfert, le précède directement, lesdits premier et deuxième moyens 118, 218 se succédant.

Grâce à la came 30, chaque moyen 18 de transfert se présente successivement dans la position de chargement avec un pas initial P qui, déterminé par rapport au moyen de transfert l'y précédant, est au moins égal au premier pas P1 de la souffleuse.

Le second tronçon T2 de la came 30 s'étend suivant le sens de rotation autour de l'axe central O de rotation de la position de chargement à la position de déchargement.

Le second tronçon T2 de came est apte à accélérer le moyen 218 de transfert le parcourant pour réduire l'écartement angulaire ou pas entre ce deuxième moyen 218 de transfert et le premier moyen 118 de transfert qui, suivant le sens de rotation anti-horaire du dispositif 10 de transfert, le précède directement.

Grâce à quoi, chaque moyen 18 de transfert se présente successivement dans la position de déchargement avec un pas final P' qui, déterminé par rapport au moyen 18 de transfert le précédant, est égal audit second pas P2 de la remplisseuse.

Avantageusement, la came 30 est montée en partie supérieure du dispositif 10 de transfert et est facilement accessible en vue d'un démontage de manière que la variation de pas entre le pas initial P et le pas final P' puisse être aisément modifiée en changeant notamment ladite came 30.

L'invention concerne un dispositif 10 de transfert à pas variable comportant un disque 12 d'entraînement tournant autour d'un axe O de rotation, au moins deux moyens 18 de transfert respectivement porté par des moyens (20) de guidage tournant autour dudit axe O et entraîné en rotation par ledit disque 12, une came 30 fixe comportant un chemin 42 de came,
- une bielle 44 dont une extrémité est montée pivotante par rapport aux moyens 20 de guidage autour d'un axe A de pivotement et dont l'autre extrémité porte un galet 46 de commande qui coopère avec le chemin 42 de came,
- une bielle 46 dont une extrémité est montée pivotante par rapport aux moyens 20 de guidage autour dudit axe A et dont l'autre extrémité portant un galet 50 d'entraînement qui est reçu et guidé dans une lumière 52 du disque 12, la bielle 44 et la bielle 46 étant solidaires en rotation autour dudit axe A.

## Revendications

1. Dispositif (10) de transfert à pas variable pour des corps (60) creux, ledit dispositif (10) comportant au moins :
- un disque (12) d'entraînement monté mobile en rotation autour d'un axe central (O) de rotation,
- au moins deux moyens (18) de transfert consécutifs angulairement dont chacun est porté par des moyens (20) de guidage qui sont montés mobiles en rotation autour de l'axe central (O) de rotation et dont chacun est entraîné en rotation par le disque (12) d'entraînement,
- une came (30) qui est fixe par rapport à l'axe central (O) de rotation et comporte un chemin (42) de came formant un parcours en boucle fermée,
ledit dispositif (10) comportant pour chaque moyen (18) de transfert au moins :
- une première bielle (44) dont une extrémité est montée pivotante par rapport aux moyens (20) de guidage autour d'un axe (A) de pivotement qui est parallèle à l'axe central (O) de rotation, et dont l'autre extrémité porte un galet (46) de commande qui coopère avec le chemin (42) de came de la came (30) fixe,
- une deuxième bielle (48) dont une extrémité est montée pivotante par rapport aux moyens (20) de guidage autour dudit axe (A) de pivotement de la première bielle (44),
**caractérisé en ce que** l'autre extrémité de la deuxième bielle (48) porte un galet (50) d'entraînement qui est reçu et guidé dans une lumière (52) formée dans le disque (12) d'entraînement, la première bielle (44) et la deuxième bielle (48) étant solidaires en rotation autour dudit axe (A) de pivotement,
grâce à quoi le pas entre deux moyens (18) de transfert consécutifs varie lorsque lesdits moyens (18) de transfert sont entraînés en continu en rotation par le disque (12) d'entraînement.

2. Dispositif (10) selon la revendication 1, **caractérisé en ce que** la première bielle (44) et la deuxième bielle (48) sont :
- respectivement montées aux deux extrémités opposées d'une barre (56) de liaison formant ledit axe (A) de pivotement commun,
- sont décalées l'une par rapport à l'autre selon l'axe central (O) de rotation et
- sont reliées ensemble par ladite barre (56) de liaison qui est montée libre à rotation par rapport aux moyens (20) de guidage et est liée en déplacement aux moyens (20) de guidage.

3. Dispositif (10) selon la revendication 1, **caractérisé en ce que** les moyens (20) de guidage d'un moyen (18) de transfert sont formés par une paire de bras de guidage décalés axialement selon l'axe central (O) de rotation.

4. Dispositif (10) selon la revendication 1, **caractérisé en ce que** chaque moyen (18) de transfert du dispositif (10) exécute en continu ledit parcours en boucle fermé entre, en amont, une première zone (Z1) de chargement d'un corps (60) creux et, en aval, une deuxième zone (Z2) de déchargement du corps (60) creux, lesdits deux moyens (18) de transfert se présentant successivement, d'une part, dans ladite première zone (Z1) de chargement avec un pas initial (P) pour occuper une position de chargement déterminée et, d'autre part, dans ladite deuxième zone (Z2) de déchargement avec un pas final (P') pour occuper une position de déchargement déterminée.

5. Dispositif (10) selon l'une quelconque des revendications 1 à 4, **caractérisé en ce que** le corps creux est une préforme.

6. Dispositif (10) selon l'une quelconque des revendications 1 à 4, **caractérisé en ce que** le corps creux est un récipient (60).

## Patentansprüche

1. Transportvorrichtung (10) mit variabler Teilung für Hohlkörper (60), wobei die Vorrichtung (10) mindestens Folgendes aufweist:
eine Antriebsscheibe (12), welche um eine zentrale Drehachse (0) drehbeweglich montiert ist,
mindestens zwei in Umfangsrichtung aufeinander folgende Transportmittel (18), welche jeweils von Führungsmitteln (20) getragen werden, welche um die zentrale Drehachse (0) drehbeweglich montiert sind und
welche jeweils durch die Antriebsscheibe (12) in Drehung versetzt werden,
eine Kurvenscheibe (30), welche in Bezug auf die zentrale Drehachse (0) fest ist und eine Kurvenbahn (42) aufweist, welche eine Strecke in geschlossener Schleife bildet,
wobei die Vorrichtung (10) für jedes Transportmittel (18) mindestens Folgendes aufweist:
eine erste Lenkstange (44), deren eines Ende in Bezug auf die Führungsmittel (20) schwenkbar um eine Schwenkachse (A), welche parallel zur zentralen Drehachse (0) verläuft, montiert ist, und deren anderes Ende eine Steuerrolle (46) trägt, welche mit der Kurvenbahn (42) der festen Kurvenscheibe (30) zusammenwirkt,
eine zweite Lenkstange (48), deren eines Ende in Bezug auf die Führungsmittel (20) schwenkbar um die Schwenkachse (A) der ersten Lenkstange (44) montiert ist,
**dadurch gekennzeichnet, dass** das andere Ende der zweiten Lenkstange (48) eine Antriebsrolle (50) trägt,
welche in einem Langloch (52) aufgenommen und geführt ist, welches in der Antriebsscheibe (12) ausgebildet ist, wobei die erste Lenkstange (44) und die zweite Lenkstange (48) drehfest um die Schwenkachse (A) miteinander verbunden sind, Dank dessen die Teilung zwischen zwei aufeinander folgenden Transportmitteln (18) variiert, wenn die Transportmittel (18) durch die Antriebsscheibe (12) fortlaufend in Drehung versetzt werden.

2. Vorrichtung (10) nach Anspruch 1, **dadurch gekennzeichnet, dass** die erste Lenkstange (44) und die zweite Lenkstange (48):
- jeweils an zwei gegenüberliegenden Enden eines Verbindungsstabs (56) unter Bildung der gemeinsamen Schwenkachse (A) montiert sind,
- gemäß der zentralen Drehachse (0) zueinander versetzt sind, und
- durch den Verbindungsstab (56) miteinander verbunden sind, welcher in Bezug auf die Führungsmittel (20) frei drehbar montiert und mit dem Führungsmittel (20) verschiebbar verbunden ist.

3. Vorrichtung (10) nach Anspruch 1, **dadurch gekennzeichnet, dass** die Führungsmittel (20) eines Transportmittels (18) von einem Paar von Führungsarmen gebildet werden, welche gemäß der zentralen Drehachse (0) versetzt sind.

4. Vorrichtung (10) nach Anspruch 1, **dadurch gekennzeichnet, dass** jedes Transportmittel (18) der Vorrichtung (10) fortlaufend die Strecke in geschlossener Schleife zwischen, stromaufwärts, einer ersten Zone (Z1) zum Beladen eines Hohlkörpers (60) und, stromabwärts, einer Zone (Z2) zum Entladen des Hohlkörpers (60) durchläuft, wobei die beiden Transportmittel (18) nacheinander einerseits in der ersten Zone (Z1) zur Beladung mit einer Ausgangsteilung (P), um eine vorgegebene Beladeposition einzunehmen, und andererseits in der zweiten Zone (Z2) zur Entladung mit einer Endteilung (P') erscheinen, um eine vorgegebene Entladeposition einzunehmen.

5. Vorrichtung (10) nach einem der Ansprüche 1 bis 4, **dadurch gekennzeichnet, dass** der Hohlkörper ein Vorformling ist.

6. Vorrichtung (10) nach einem der Ansprüche 1 bis 4, **dadurch gekennzeichnet, dass** der Hohlkörper ein Behälter (60) ist.

## Claims

1. Variable-pitch transfer device (10) for hollow bodies (60), said device (10) comprising at least:
- one drive disc (12) mounted so as to be able to rotate about a central axis of rotation (0),
- at least two angularly consecutive transfer means (18), each of which is borne by guiding means (20) which are mounted so as to be able to rotate about the central axis of rotation (0), and each of which is driven in rotation by the drive disc (12),
- one cam (30) which is fixed with respect to the central axis of rotation (0) and comprises a cam track (42) forming a closed-loop path,
said device (10) comprising, for each transfer means (18), at least:
- one first rod (44), of which one end is mounted so as to be able to pivot with respect to the guiding means (20) about a pivoting axis (A) which is parallel to the central axis of rotation (0), and of which the other end bears a control roller (46) which engages with the cam track (42) of the fixed cam (30),
- one second rod (48), of which one end is mounted so as to be able to pivot with respect to the guiding means (20) about said pivoting axis (A) of the first rod (44),
**characterized in that** the other end of the second rod (48) bears a drive roller (50) which is received and guided in an opening (52) formed in the drive disc (12), the first rod (44) and the second rod (48) being secured in rotation about said pivoting axis (A),
by means of which the pitch between two consecutive transfer means (18) varies when said transfer means (18) are driven continuously in rotation by the drive disc (12).

2. Device (10) according to Claim 1, **characterized in that** the first rod (44) and the second rod (48) are:
- respectively mounted at opposite ends of a connecting bar (56) forming said common pivoting axis (A),
- offset with respect to one another along the central axis of rotation (0) and
- are connected to one another by said connecting bar (56), which is mounted so as to rotate freely with respect to the guiding means (20) and is connected so as to move with the guiding means (20).

3. Device (10) according to Claim 1, **characterized in that** the guiding means (20) of a transfer means (18) are formed by a pair of guiding arms that are offset axially with respect to the central axis of rotation (0).

4. Device (10) according to Claim 1, **characterized in that** each transfer means (18) of the device (10) continuously follows said closed-loop path between, upstream, a first zone (Z1) for loading a hollow body (60) and, downstream, a second zone (Z2) for unloading the hollow body (60), said two transfer means (18) being in succession, on one hand, in said first loading zone (Z1) with an initial pitch (P) in order to occupy a defined loading position and, on the other hand, in said second unloading zone (Z2) with a final pitch (P') in order to occupy a defined unloading position.

5. Device (10) according to any one of Claims 1 to 4, **characterized in that** the hollow body is a preform.

6. Device (10) according to any one of Claims 1 to 4, **characterized in that** the hollow body is a container (60).
